# EUROPÄISCHE PATENTANMELDUNG

(11) **EP 1 849 724 A2**
(43) Veröffentlichungstag der Anmeldung: **31.10.2007**
(21) Anmeldenummer: 07008407.4
(22) Anmeldetag: 25.04.2007
(51) Int. Cl.: B65G 37/02, B65G 47/52

(54) **Beförderungsvorrichtung für auf Rollen verfahrbare Gegenstände und Verfahren**

(30) Priorität: 25.04.2006 DE 202006006816 U
(71) Anmelder: Panofski, Stephan, 21376 Salzhausen (DE)
(72) Erfinder: Panofski, Stephan, 21376 Salzhausen (DE)
(74) Vertreter: Schupfner, Georg

(57) **Zusammenfassung**

Die Erfindung betrifft eine Beförderungsvorrichtung für auf Rollen verfahrbare Gegenstände, wie Einkaufswagen, Servierwagen, Transportwagen, mit einem oder mehreren Förderbändern, deren Verwendung und ein Verfahren zum Befördern von auf Rollen verfahrbaren Gegenständen auf Förderbändern.

## Beschreibung

Die Erfindung bezieht sich auf eine Beförderungsvorrichtung für auf Rollen verfahrbare Gegenstände, wie Einkaufswagen, Servierwagen, Transportwagen, mit einem oder mehreren Förderbändern, deren Verwendung und ein Verfahren zum Befördern von auf Rollen verfahrbaren Gegenständen auf Förderbändern.

Der Transport von verfahrbaren Gegenständen auf Förderbändern ist schwierig, weil derartige Gegenstände dazu neigen, sich nicht zur Mitte hin auszurichten, sondern rechts oder links vom Förderband abzurollen bzw. gegen seitliche Führungswände zu laufen, insbesondere, wenn die Räder der Gegenstände verschwenkbar sind, wie dies beispielsweise bei Einkaufswagen der Fall ist. Weiterhin steht die Trägheit des verfahrbaren Gegenstandes einer Beförderung entgegen.

Es ist Aufgabe der Erfindung, eine Beförderungsvorrichtung und ein Verfahren zum Befördern von auf Rollen verfahrbaren Gegenständen, insbesondere solche mit zwei Achsen und mindestens 4 Rädern, wie Einkaufswagen, Servierwagen und Transportwagen, zu schaffen, bei der die Wagen sich selbsttätig zur Mitte des Förderbandes hin ausrichten und befördert werden.

Die gestellte Aufgabe ist erfindungsgemäß gelöst durch die unabhängigen Ansprüche. Bevorzugte Ausführungsformen sind durch die Unteransprüche bezeichnet bzw. nachfolgend erläutert.

Die Erfindung betrifft eine Beförderungsvorrichtung, bei der zumindest ein Förderband auf der Aufsetzseite für die Gegenstände mit einer Vielzahl von Mitnahmerippen für die Räder versehen ist, mit beidseits außen schräg zu den Förderbandrändern hin nach hinten, bezogen auf die Förderrichtung, verlaufenden Mitnahmerippenschenkeln und in Bezug auf die andere Schenkelseite vorne, bezogen auf die Förderrichtung, zur Mitte hin nach innen schräg gerichteten Mitnahmerippenschenkeln.

Die Mitnahmerippenschenkel aufeinander folgender Mitnahmerippen sind vorzugsweise jeweils gleichartig angeordnet und Bezug auf die Variante mit gerader Linienform der Mitnahmerippenschenkel jeweils parallel zueinander ausgerichtet.

Jeweils zwei Mitnahmerippenschenkel bilden eine Mitnahmerippe, wegen Ihres pfeifförmigen, beidseits zur Mitte nach vorne, bezogen auf die Förderrichtung, hin gerichteten Verlaufs werden die Mitnahmerippenschenkel nachfolgend auch Pfeilschenkel genant. Es ist jedoch nicht Bedingung, dass die Mitnahmerippenschenkel vorne spitz zusammenlaufen, weil es auch möglich ist, dass die vordere Spitze, gebildet aus beiden Mitnahmerippenschenkeln, ausgespart ist, weil der Achsenabstand und die Heranführung der Wagen eine Spitze nicht erforderlich machen. Dann laufen die Mitnahmerippenschenkel lediglich auf einer gedachten Linie pfeilförmig zusammen und bilden ein Raster gleich schräg gestellten Sprossen zweier paralleler Leitern.

Die Mitnahmerippenschenkel sind vorzugsweise mit einem spitzen Winkel von 20 bis 70°, insbesondere 30 bis 60° zu den Förderbandrändern gestellt. Die Schenkel der Mitnahmerippen können "V" oder "U" (mit rundem Boden) -förmig zusammenlaufen.

Insbesondere ist Gegenstand der Erfindung eine Beförderungsvorrichtung für auf Rollen verfahrbare Gegenstände, wie Einkaufswagen, Servierwagen, Transportwagen, mit einem oder mehreren Förderbändern aufweisend auf der Aufsetzseite des Förderbands für die Gegenstände Mitnahmerippen die einen in Förderrichtung der Förderbänder gepfeilten V-förmigen Verlauf aufweisen, wobei sich die Spitzen der gepfeilten V-förmigen Mitnahmerippen in Förderrichtung vorn etwa im Förderbandmittenbereich befinden und die Pfeilschenkel schräg zu den Förderbandrändern hin nach hinten, bezogen auf die Förderrichtung, verlaufen.

Bei einer derart ausgebildeten Beförderungsvorrichtung rutschen die auf Rollen verfahrbaren Gegenstände, vereinfacht Wagen genannt, selbsttätig in die Mitte der Förderbänder. Die Wagen kollidieren nicht mehr mit seitlichen Führungswänden.

Ein weiterer Vorteil besteht darin, dass der Achsabstand der Wagen und der Abstand der Räder auf einer Achse beliebig gewählt werden kann. Nach einer weiteren Ausgestaltung der Erfindung ist vorgesehen, dass die Mitnahmerippen leisten- oder wulstförmig ausgebildet sind.

Nach einer weiteren Ausgestaltung der Erfindung sind jeweils zwei Förderbänder vorgesehen, die in gegenläufigen Richtungen parallel zueinander verlaufen, so dass die Gegenstände mittels einer Übergabevorrichtung von dem einen Förderband zum anderen übersetzbar sind bzw. in einem Halbkreis von einem Greifer ohne Fahrtrichtungswechsel von dem einen auf das andere Förderband geführt werden können.

Nach einer weiteren Ausgestaltung der Erfindung ist vorgesehen, dass zur Übergabe eines Gegenstandes an eine Mitnahmerippe eines Förderbandes eine Schaltwippe vorgesehen ist, die eine Wippstellung aufweist, in der die Rollen eines Gegenstandes so lange arretierbar sind, bis die arretierten Rollen durch ein Verschwenken so freigebbar sind, dass eine Mitnahmerippe den Gegenstand zur Behandlung auf das laufende Förderband ziehen kann.

Die Schaltwippe weist Haltewannen für Rollen von Gegenständen auf und ist um eine Wippachse kippbar mittels eines elektrischen oder hydraulischen Stellgliedes.

Nach einer weiteren Ausgestaltung der Erfindung ist vorgesehen, dass die Haltewannen mit Begrenzungsplatten versehen sind, die in den Endbereichen der Schaltwippe die Aufnahmebereiche für die Rollen des Gegenstandes eingrenzen, die in den Haltewannen auf die Freigabe zum Auflaufen auf das Förderband verharren.

Zur Durchführung der Beförderung dient ein Verfahren, bei dem auf das Förderband aufgebrachte Gegenstände von den Mitnahmerippen auf das Förderband gezogen und bei der Mitnahme zur Förderbandmitte zentriert werden, indem von den Rollen an den schräg nach hinten verlaufenden Rippenteilen eine Mittelstellung gesucht wird.

Das Förderband kann auch einstückig in Form eines U's mit einem runden Verbindungsstück und im z.B. parallelen Eingangs- und Ausgangsföderbereich geführt sein. Nach dieser Variante können die Förderbander oder ein kreissegmentförmiges Übergabeförderband als auf drehbaren Tellern gelagerter und geführter Plattenverbund definiert sein.

In weiterer Ausgestaltung des Verfahrens ist vorgesehen, dass die Gegenstände einzeln, getaktet und in Abständen auf das Förderband aufgegeben werden, indem sie zunächst auf der Schaltwippe in einer Startposition gehalten werden, und dass die Gegenstände einzeln und definiert aus dieser Startposition freigegeben werden, wenn die Schaltwippe so verschwenkt wird, dass eine Mitnahmerippe, die hinter Rollen des freigegebenen Gegenstandes greift, diesen auf das Förderband ziehen und auf ihm weiter transportiert. Die Schaltwippe kann die festgesetzten Hinterräder beim Freigegeben auch leicht schräg nach oben anstellen, um in der Startposition dem Gegenstand einen Impuls in Förderrichtung zu geben.

In weiterer Ausgestaltung des Verfahrens ist vorgesehen, dass die Förderbänder Teil eines Reinigungstunnels sind, um die Gegenstände durch den Reinigungstunnel zu fahren und dabei mit einer Reinigungsflüssigkeit zu besprühen bzw. ggf. nachfolgend zu trocknen.

In weiterer Ausgestaltung des Verfahrens ist vorgesehen, dass die Gegenstände nach dem Verlassen des ersten Förderbandes auf den Schlitten einer Übergabestation geschoben, auf dem Schlitten vor das Förderband gefahren und von diesem auf das Förderband geschoben werden.

Hierbei handelt es sich um ein Verfahren zur Beförderung eines auf Rollen verfahrbaren Gegenstandes, wie eines Einkaufs-, Servier- oder Transportwagens, nach dem die auf das Förderband aufgebrachten Gegenstände von den Mitnahmerippen auf das Förderband gezogen und bei der Mitnahme zur Förderbandmitte zentriert werden, indem von den Rollen an den schräg nach hinten verlaufenden Pfeilschenkeln eine Mittelstellung gesucht wird.

Das Verfahren ist weiterhin gekennzeichnet dadurch, dass die Gegenstände mit gegenseitigen Abständen einzeln auf das Förderband aufgegeben werden, indem sie zunächst auf der Schaltwippe in einer Startposition gehalten werden, und dass die Gegenstände einzeln aus dieser Startposition freigegeben werden, wenn die Schaltwippe so verschwenkt wird, dass eine Mitnahmerippe, die hinter Rollen des freigegebenen Gegenstandes greift, diesen auf das Förderband ziehen und auf ihm transportiert.

Weiterhin können die Gegenstände mittels der Förderbänder durch einen Reinigungstunnel gefahren werden und dabei mit einer Reinigungsflüssigkeit besprüht und gespült werden, wobei die Gegenstände nach dem Verlassen des Reinigungstunnels ggf. auf einem Schlitten zu einer Übergabestation geschoben, auf dem Schlitten vor das Förderband gefahren und von diesem auf das Förderband geschoben werden, auf dem sie durch den Trocknungstunnel gefahren und mit Trocknungsluft getrocknet werden.

Die Erfindung wird anhand der Zeichnung näher erläutert. Die Figuren zeigen die Beförderung anhand einer Reinigungsvorrichtung für Einkaufswagen, wobei selbstverständlich auch jede andere Anwendung oder auch keine weitere Anwendung auf die auf Rollen verfahrbaren Gegenstände während der Beförderung erfolgen kann. Es zeigen:
Fig. 1 schematisch den Transportweg von mit Rollen versehenen Gegenständen, wie Einkaufswagen, Servierwagen oder Transportwagen, in einer zu ihrer Reinigung vorgesehenen Reinigungsvorrichtung mit einer Schaltwippe, einem Förderband, auf dem die Gegenstände gereinigt werden, einer Übergabestation mit einem Übergabeschlitten und einem Förderband, auf dem die Gegenstände getrocknet werden,
Fig. 2 ein Schnittbild durch die Reinigungsvorrichtung, wobei Einkaufswagen in einem Tunnel auf dem einen der Förderbänder fahrend mit Reinigungsflüssigkeit besprüht und gespült werden und auf dem anderen Förderband fahrend getrocknet werden,
Fig. 3 schaubildlich eine Schaltwippe zum Festlegen von Rollen eines Gegenstandes in einer Startposition vor dem Auflaufen auf das Förderband, auf dem die Reinigung erfolgt,
Fig. 4 eine Ansicht der Schaltwippe mit einem Stellglied zu ihrem Schwenken,
Fig. 5 einen Schnitt durch die Schaltwippe längs der Linie A-A in einer Stellung, in der die Rollen eines Gegenstandes in eine Startposition einlaufen können,
Fig. 6 einen Schnitt durch die Schaltwippe längs der Linie A-A in einer Stellung, in der die Räder eines Gegenstandes aus der Startposition auf das Förderband zum Reinigen des Gegenstandes auslaufen können.

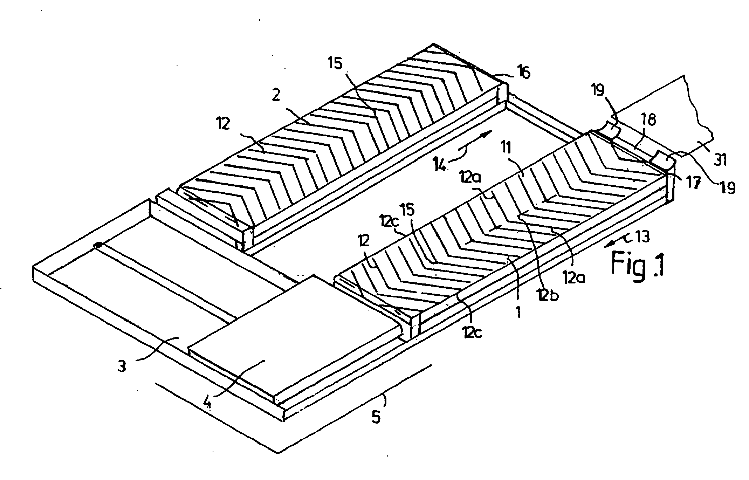

Fig. 1 zeigt nebeneinander zwei Förderbänder 1 und 2, die mittels einer Übergabestation 3 verbunden sind. Die Übergabestation weist einen Schlitten 4 auf, der zwischen den Förderbändern 1 und 2 verfahrbar ist.

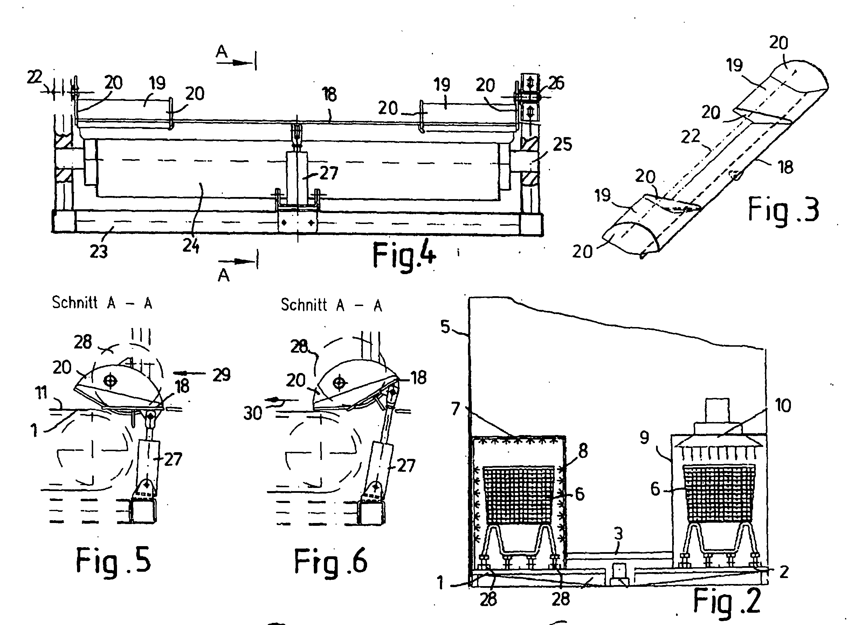

Fig. 2 zeigt innerhalb eines Containers 5 die Förderbänder 1 und 2 mit auf ihnen fahrenden Einkaufswagen 6. Man erkennt, dass das Förderband 1 in einem Reinigungstunnel 7 verläuft, der mit Spritzdüsen 8 zum Besprühen und Spülen des auf ihm stehenden Einkaufwagens 6 versehen ist. Das Förderband 2 verläuft parallel dazu ebenfalls in einem Trocknungstunnel 9 zurück. Über diesem Trocknungstunnel 9 befindet sich ein Aggregat 10, das Trocknungsluft auf den Einkaufswagen 6 im Trocknungstunnel 9 bläst. Im Hintergrund des Bildes erkennt man die Übergabestation 3.

Die Förderbänder 1 und 2 sind auf ihren Aufsetzseiten 11 mit Mitnahmerippen 12 versehen. Die Mitnahmerippen 12 können beispielsweise wulst- oder stegförmig ausgebildet sein. Wichtig ist dabei die Art ihrer Anordnung auf den Förderbändern 1 und 2. Die Mitnahmerippen 12 haben auf der Aufsetzseite 11 für die Einkaufswagen 6 einen in Förderrichtung der Förderbänder 1,2 gepfeilten V-förmigen Verlauf, wobei sich die Spitzen 15 der gepfeilten V-förmigen Mitnahmerippen 12 in Förderrichtung 13,14 vorn etwa im Förderbandmittebereich 12 b befinden und die Pfeilschenkel 12 a schräg zu den Förderbandrändern 12 c hin nach hinten verlaufen.

In der Zeichnung zeigen damit die Spitzen 15 des Förderbandes 1 in Richtung auf die Übergabestation 3, während die Spitzen 15 des Förderbandes 2 auf das Ausgabeende 16 zeigen.

Einkaufswagen haben vordere Rollen und hintere Rollen. Die vorderen, nicht dargestellten Rollen der Einkaufswagen 6 haben keine Führungseigenschaften; sie sind um vertikale Achsen frei drehbar. Damit lassen sich die Einkaufswagen 6 in den Gängen der Einkaufsmärkte gut bewegen. Der Nachteil ist aber, dass sie auch auf Förderbändern mit quer zur Förderrichtung verlaufenden Mitnehmerrippen keine Führung haben. Beim Einsatz der V-förmigen Mitnehmerrippen 12 nach der Erfindung rutschen die vorderen Rollen an den - in Förderrichtung gesehen - schräg nach hinten verlaufenden Pfeilschenkeln 12 a der Mitnehmerrippen 12 in eine Mittelstellung. Die Einkaufswagen 6 stoßen also nicht gegen die Tunnelwände.

Fig. 1 zeigt auch, dass vor dem Aufgabeanfang 17 des Förderbandes 1 eine Schaltwippe 18 vorgesehen ist. Diese Schaltwippe 18 ist in Fig. 3 vergrößert dargestellt. Die Schaltwippe 18 hat zwei Haltewannen 19 für die hinteren Rollen 28 eines Einkaufswagens 6 oder einen anderen auf Rollen stehenden Gegenstand.

Die Haltewannen 19 sind mit Begrenzungsplatten 20 versehen, die in den Endbereichen der Schaltwippe 18 Aufnahmebereiche für die Rollen 28 des Einkaufswagens 6 eingrenzen. Die Einkaufswagen 6 werden soweit in Richtung auf den Reinigungstunnel 7 an das Förderband 1 herangeschoben, bis die hinteren Rollen des Einkaufswagens 6 in die Haltewannen 19 einlaufen. In diesen Haltewannen 19 verharren sie, bis die Schaltwippe 18 um eine Schwenkachse 22 so gekippt wird, dass der Einkaufswagen 6 freigegeben und von den Mitnahmerippen 12 in den Reinigungstunnel 7 mitgenommen werden kann.

Fig. 4 zeigt die Anordnung der Schaltwippe 18 vor dem Förderband 1, das im Reinigungstunnel 7 umläuft. Das Förderband 1 ist am Rahmen 23 der Reinigungsvorrichtung mit Umlenkwalzen 24 in Lagern 25 gelagert. Ebenso ist die Schaltwippe 18 in Lagern 26 des Rahmens 23 gelagert. Am Rahmen 23 stützt sich ein hydraulisches oder elektrisches Stellglied 27 ab.

Fig. 5 zeigt anhand des Schnittes A-A nach Fig. 4 die Schaltwippe 18 in einer Schwenkstellung, in der die Rollen 28 in Richtung eines Pfeiles 29 in die Haltewannen 19 einlaufen können.

Fig. 6 zeigt anhand des Schnittes A-A nach Fig. 4 die Schaltwippe 18 in einer Schwenkstellung, in der die Rollen 28 in Richtung des Pfeiles 30 auf das Förderband 1 auflaufen können. Gezogen werden sie dabei von einer der Mitnahmerippen 12. Die Verschwenkung der Schaltwippe 18 erfolgt mittels des Stellgliedes 27.

Die Verfahrenweise des Transportes auf den Förderbändern 1, 2 und der Übernahme eines Einkaufswagens zum Transport muss so geregelt sein, dass die Einkaufswagen einzeln in vorgegebenen Abständen in den Reinigungstunnel 7 einlaufen. Dazu dient die Schaltwippe 18, die sich an eine Anlieferungsvorrichtung anschließt.

Die Einkaufswagen 6 werden beispielsweise von Hand oder mechanisch ineinandergeschoben der Reinigungsvorrichtung zugeführt. Der jeweils vordere Einkaufswagen 6 fährt mit seinen hinteren Rollen 28 in die Haltewannen 19 ein. Sobald ein Einkaufswagen 6, der bereits in den Reinigungstunnel 7 eingefahren ist, weit genug vorgefahren ist, kippt das Stellglied 27 die Schaltwippe 18 von der Stellung nach Fig. 5 in die Stellung nach Fig. 6.

Die vorderen Rollen werden nun von der von hinten auf sie auflaufenden V-förmigen Mitnahmerippe 12 erfasst. Die Mitnahmerippe 12 zieht den Einkaufswagen 6 in den Reinigungstunnel 7. Die beweglichen vorderen Rollen rutschen nun an den - in Förderrichtung gesehen - schräg nach hinten verlaufenden Pfeilschenkeln 12a der Mitnahmerippen 12 in eine Mittelstellung. Der Einkaufswagen 6 läuft gerade in den Reinigungstunnel 7 ein.

Im Reinigungstunnel 7 werden die Einkaufswagens 6 in einem Abstand voneinander, der von der Schaltwippe 18 vorgegeben wird, mit Reinigungsflüssigkeit besprüht. Am Ende des Förderbandes 1 werden die Einkaufswagen 6 auf den Schlitten 4 der Übergabestation geführt. Mit dem Schlitten 4 werden sie dann vor das Förderband 2 gefahren. Mittels eines nicht dargestellten Schiebers werden die Einkaufswagen 6 dann auf das Förderband 2 geschoben. Dabei gelangen die Einkaufswagen 6 in den Trocknungstunnel 9. Im Trocknungstunnel 9 wird Trocknungsluft auf die Einkaufswagen geblasen.

## Patentansprüche

1. Beförderungsvorrichtung für auf Rollen verfahrbare Gegenstände (6), wie Einkaufswagen, Servierwagen, Transportwagen, mit einem oder mehreren Förderbändern (1,2) aufweisend auf der Aufsetzseite (11) des Förderbands (1) für die Gegenstände (6) Mitnahmerippen (12) mit jeweils paarweise zwei Mitnahmerippenschenkeln (12a), die jeweils beidseits der Mitte nach außen schräg zu den Förderbandrändern (12c) hin nach hinten verlaufen und vorne zur Mitte hin nach innen aufeinander zu gerichtet sind, jeweils bezogen auf die Förderrichtung (13,14) der Förderbänder (1,2).

2. Beförderungsvorrichtung nach Anspruch 1, **dadurch gekennzeichnet, dass** die Mitnahmerippen (12) einen in Förderrichtung (13,14) der Förderbänder (1,2) gepfeilten V-förmigen Verlauf aufweisen, wobei sich die Spitzen (15) der gepfeilten V-förmigen Mitnahmerippen (12) in Förderrichtung (1,2) vorn etwa im Förderbandmittenbereich (12b) befinden und die Mitnahmerippenschenkeln (12a) schräg zu den Förderbandrändern (12c) hin nach hinten verlaufen.

3. Beförderungsvorrichtung nach zumindest einem der vorhergehenden Ansprüche, **dadurch gekennzeichnet, dass** die Mitnahmerippenschenkel (12a) mit einem spitzen Winkel von 20 bis 70°, insbesondere 30 bis 60° zu den Förderbandrändern nach vorne gestellt sind.

4. Beförderungsvorrichtung nach Anspruch 1, **dadurch gekennzeichnet, dass** die Mitnahmerippen (12) leisten- oder wulstförmig ausgebildet sind.

5. Beförderungsvorrichtung nach einem oder mehreren der vorhergehenden Ansprüche, **dadurch gekennzeichnet, dass** die Beförderungsvorrichtung zwei Förderbänder (1,2) aufweist.

6. Beförderungsvorrichtung Anspruch 5, **dadurch gekennzeichnet, dass** zwei Förderbänder (1,2) in gegenläufigen Richtungen parallel zueinander verlaufen und dass die Gegenstände (6) insbesondere mittels einer Übergabevorrichtung (3) von dem einen Förderband (1) zum anderen Förderband (2) übersetzbar sind.

7. Beförderungsvorrichtung nach einem oder mehreren der vorhergehenden Ansprüche, **dadurch gekennzeichnet, dass** zur Übergabe eines Gegenstandes (6) an eine Mitnahmerippe (12) eines Förderbandes (1) eine Freigabevorrichtung (18) vorgesehen ist, die eine Sperrstellung aufweist, in der die Rollen (28) eines Gegenstandes (6) solange arretierbar sind, bis durch ein Freigeben der arretierten Rollen (28) zumindest eine Mitnahmerippe (12) den Gegenstand (6) zur Behandlung auf das laufende Förderband (1) zieht.

8. Beförderungsvorrichtung nach einem oder mehreren der vorhergehenden Ansprüche, **dadurch gekennzeichnet, dass** zur Übergabe eines Gegenstandes (6) an eine Mitnahmerippe (12) eines Förderbandes (1) die Freigabevorrichtung (18) in Form einer Schaltwippe eine Wippstellung aufweist, in der die Rollen (28) eines Gegenstandes (6) solange arretierbar sind, bis durch ein Verschwenken die arretierten Rollen (28) so freigebbar sind, dass eine Mitnahmerippe (12) den Gegenstand (6) zur Behandlung auf das laufende Förderband (1) ziehen kann.

9. Beförderungsvorrichtung nach Anspruch 8, **dadurch gekennzeichnet, dass** die Freigabevorrichtung (18) Haltewannen (19) für Rollen (28) von Gegenständen (6) aufweist und dass die Freigabevorrichtung (18) um eine Wippachse (22) kippbar ist mittels eines elektrischen, pneumatischen oder hydraulischen Stellgliedes (27).

10. Beförderungsvorrichtung nach Anspruch 8, **dadurch gekennzeichnet, dass** die Haltewannen (19) mit Begrenzungsplatten (20) versehen sind, die in den Endbereichen der Schaltwippe (18) die Aufnahmebereiche für die Rollen (28) des Gegenstandes (6) eingrenzen, die in den Haltewannen (19) auf die Freigabe zum Auflaufen auf das Förderband (1) verharren.

11. Beförderungsvorrichtung nach einem oder mehreren der vorhergehenden Ansprüche, **dadurch gekennzeichnet, dass** die Gegenstände (6) mittels des Förderbandes / der Förderbänder (1) durch Reinigungsbereiche (7) und gegebenenfalls auch Trocknungsbereiche (9) förderbar sind.

12. Beförderungsvorrichtung nach einem oder mehreren der vorhergehenden Ansprüche, **dadurch gekennzeichnet, dass** beidseits des Förderbandes / der Förderbänder (1) seitlichen Führungswände angeordnet sind.

13. Verwendung der Beförderungsvorrichtung gemäß zumindest einem der Ansprüche 1 bis 12 als Teil einer Reinigungsanlage durch die verfahrbare Gegenstände (6) gefahren werden.

14. Verfahren zur Beförderung von auf Rollen verfahrbaren Gegenstände (6), wie Einkaufswagen, Servierwagen, Transportwagen, mit einem oder mehreren Förderbändern (1,2) auf einer Beförderungsvorrichtung gemäß zumindest einem der Ansprüche 1 bis 12, **dadurch gekennzeichnet, dass** die vorderen Räder, bezogen auf die Beförderungsrichtung, einer Achse eines verfahrbaren Gegenstandes (6) von den Mitnahmerippen (12) des Förderbands erfasst werden, und der verfahrbare Gegenstand auf das Förderband (1) gezogen wird und die Räder sich zwischen den Mitnahmerippenschenkeln (12a) so ausrichten, dass der verfahrbare Gegenstand etwa mittig auf dem Förderband (1) transportiert wird.

15. Verfahren zur Beförderung nach Anspruch 14, **dadurch gekennzeichnet, dass** eine Freigabevorrichtung (18) die hinteren Rollen (28) solange arretiert bis durch die Freigabevorrichtung (18) die arretierten Rollen (28) freigegeben werden, vorzugsweise durch eine Freigabevorrichtung (18) in Form einer schwenkbaren Schaltwippe, und nach Freigabe (12) die Mitnahmerippen den Gegenstand (6) auf das laufende Förderband (1) ziehen durch Hintergreifen jeweils einer der vorderen Rollen durch jeweils einen Mitnahmerippenschenkel (12a).
